# EUROPÄISCHE PATENTANMELDUNG

(11) **EP 0 939 025 A1**
(43) Veröffentlichungstag der Anmeldung: **01.09.1999**
(21) Anmeldenummer: 98112748.3
(22) Anmeldetag: 09.07.1998
(51) Int. Cl.: B62H 3/00

(54) **Doppelstöckige Einstellanlage für Fahrräder**

(30) Priorität: 27.02.1998 DE 29803435 U
(71) Anmelder: josta.technik, Fahrradhalter und Überdachungen Ernst Blume, 48153 Münster (DE)
(72) Erfinder: Blume, Ernst, 48153 Münster (DE)
(74) Vertreter: Habbel, Ludwig (Lutz)

(57) **Zusammenfassung**

Bei einer Einstellanlage für Fahrräder, mit einem Rahmen (1), und mit unteren und oberen, an dem Rahmen (1) festgelegten Aufnahmen (6,7) für die Fahrräder, wobei die oberen Aufnahmen (7) gegenüber dem Rahmen (1) absenkbar ausgebildet sind, und mit einer benutzerfernen Rückseite sowie einer dem Benutzer zugewandten Vorderseite, schlägt die Erfindung vor, daß die oberen Aufnahmen (7) eine Verriegelung (22) zur Festlegung des Fahrrades aufweisen.

## Beschreibung

Die Erfindung betrifft eine Einstellanlage nach dem Oberbegriff des Anspruches 1.

Aus dem 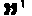 Münsterischen Anzeiger" der Tageszeitung 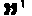 Westfälische Nachrichten" vom 11. März 1997 ist unter der Überschrift 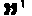 Räderständer - 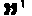 nur für Kraftprotze"" eine gattungsgemäße Einstellanlage für Fahrräder bekannt, bei der die oberen Aufnahmen für die Fahrräder als vom Rahmen ausziehbare und abkippbare Schienen ausgestaltet sind.

Bei dieser gattungsgemäßen Anlage ist nachteilig, daß die Benutzer die Fahrräder auf die Höhe der oberen Aufnahmen heben müssen. Je nach Gewicht des Fahrrades sowie in Abhängigkeit von der Körpergröße und körperlichen Verfassung des Benutzers kann dies eine erhebliche Belastung darstellen, die entweder dem Benutzer das Abstellen der Fahrräder in den oberen Aufnahmen unmöglich macht, oder die zu Verletzungsgefahren aufgrund mangelnder Kontrolle über das Fahrrad führen kann. Insbesondere bei stark belegten derartigen Einstellanlagen ist die Zugänglichkeit zu den oberen Fahrrädern schwierig.

Bei der gattungsgemäßen Einstellanlage ergibt sich eine schlechte Reinigungsmöglichkeit im Bereich der unteren Aufnahmen, da hier der Boden schlecht zugänglich ist.

Doppelstöckige Einstellanlagen für Fahrräder sind üblicherweise gerade dort gewünscht, wo große Mengen von Fahrrädern untergestellt werden müssen, beispielsweise im Bereich von Bahnhöfen oder ähnlichen öffentlichen Anlagen, wobei häufig die Einstellplätze überdacht oder unterirdisch angelegt sind. Aufgrund der möglicherweise relativ schnell auftretenden Verschmutzungen und der schlechten Reinigungsmöglichkeiten einerseits und aufgrund mangelnden Besucheraufkommens andererseits, hervorgerufen durch die Schwierigkeiten beim Abstellen der Fahrräder in den oberen Aufnahmen, entsteht schnell ein unenwünschtes soziales Klima im Bereich derartiger Einstellanlagen. Hierdurch wird die Akzeptanz derartiger Anlagen noch mehr reduziert, so daß schließlich erhebliche wirtschaftliche Schäden durch fehlende Benutzerzahlen und durch möglicherweise auftretenden Vandalismus die Folge sind.

Der Erfindung liegt die Aufgabe zugrunde, eine gattungsgemäße Einstellanlage dahingehend zu verbessern, daß diese mit möglichst einfachen und preisgünstigen Mitteln eine einfache Handhabung der Fahrräder beim Abstellen oder bei der Entnahme aus der Anlage ermöglicht und zudem eine optimale Wartung der Anlage, insbesondere auch zu Reinigungszwecken, zuläßt.

Diese der Erfindung zugrundeliegende Aufgabe wird durch eine erfindungsgemäße Einstellanlage gelöst.

Die Erfindung schlägt mit anderen Worten vor, die oberen Aufnahmen sehr tief, nämlich bodennah absenkbar auszugestalten, so daß die Fahrräder leicht beherrschbar zum Einstellen zunächst in die Aufnahmen eingeführt und dann mitsamt der Aufnahme angehoben werden können und später aus den oberen Aufnahmen genauso leicht wieder entnommen werden können. Eine Verriegelung stellt sicher, daß die Fahrräder in der oberen Aufnahme fixiert sind, so daß während des Anhebens oder Absenkens der Aufnahmen Beschädigungen der Fahrräder und Gefährdungen der Benutzer ausgeschlossen sind.

Durch die sichere, verriegelte Anordnung des Fahrrades in der oberen Aufnahme - selbst in deren abgesenkter Stellung - ist es möglich, die Aufnahme sehr steil auszurichten und dennoch einen sicheren Halt des Fahrrades zu gewährleisten. Daher kann die Aufnahme bis in Bodennähe abgesenkt werden, so daß es dem Benutzer möglich wird, das Fahrrad bequem in die Aufnahme einzufahren oder es lediglich geringfüging anzuheben.

Eine leichte Reinigung der Einstellanlage ist insbesondere dann möglich, wenn die unteren Aufnahmen vertikal schwenkbeweglich gelagert sind, also angehoben werden können. Die oberen Aufnahmen sind ohnehin im Abstand über dem Boden angeordnet, so daß die Bodenfläche unterhalb der angehobenen unteren Aufnahmen problemlos gereinigt werden kann.

Eine leichte Zugänglichkeit zu jedem Fahrrad ist auch bei nahe benachbart eingestellten Fahrrädern insbesondere dann möglich, wenn die unteren Aufnahmen horizontal schwenkbeweglich gelagert sind, so daß die Fahrräder leicht seitlich versetzt werden können, so daß sich keilförmige Zwischenräume zwischen zwei benachbarten Fahrrädern ergeben. Trotz hoher Abstelldichte der benachbarten Fahrräder läßt sich auf diese Weise jeweils bedarfsgerecht dort ein vergrößerter Zwischenraum schaffen, wo ein Zugang zu einem Fahrrad erforderlich ist.

Auf besonders preisgünstige Weise kann die obere Aufnahme dadurch abgesenkt werden, daß sie nicht insgesamt mit einer liftartigen Konstruktion angehoben oder abgesenkt wird, sondern daß sie teleskopierbar ausgestaltet ist und in ihrem gegenüber den rahmenfesten Bauteilen ausgezogenen Zustand lediglich mit einem Ende abgesenkt wird, so daß eine leichte Erreichbarkeit dieser Aufnahme und damit ein leichtes Einstellen oder eine leichte Entnahme des Fahrrades aus der Einstellanlage möglich ist.

Vorteilhafte Ausgestaltungen der Erfindung sind den Unteransprüchen entnehmbar.

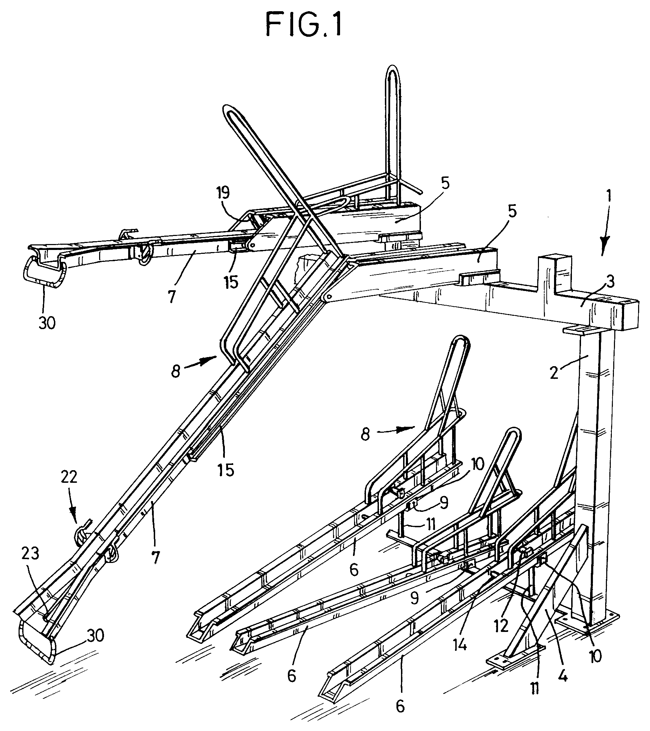

Die Zeichnungen zeigen - teilweise schematisch - Ausführungsbeispiele einer erfindungsgemäßen Einstellanlage. Dabei zeigt
- Fig. 1: eine perspektivische, teilweise wegebrochene Darstellung einer Einstellanlage für Fahrräder, mit unteren und oberen Aufnahmen,

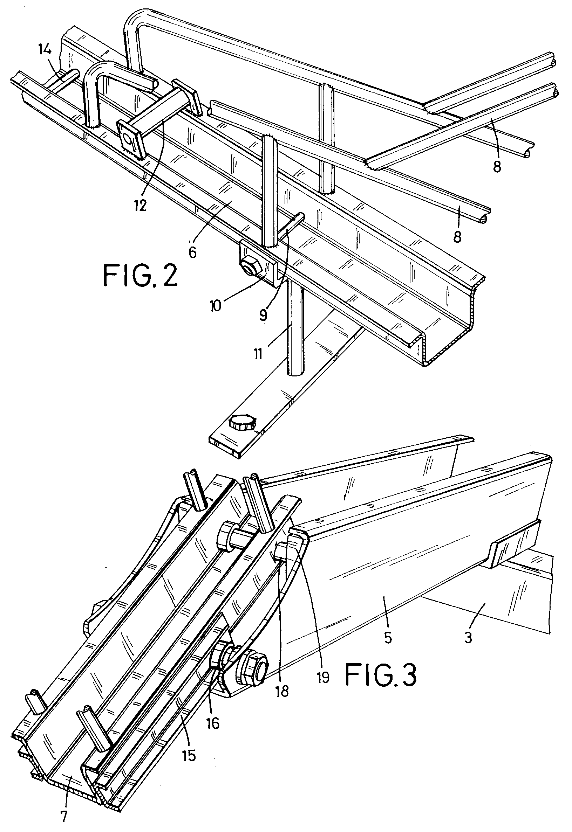

- Fig. 2: ausschnittsweise den vorderen, abgestützten Bereich einer unteren Aufnahme,
- Fig. 3: den Knickbereich einer ausgezogenen und abgewinkelten oberen Aufnahme,

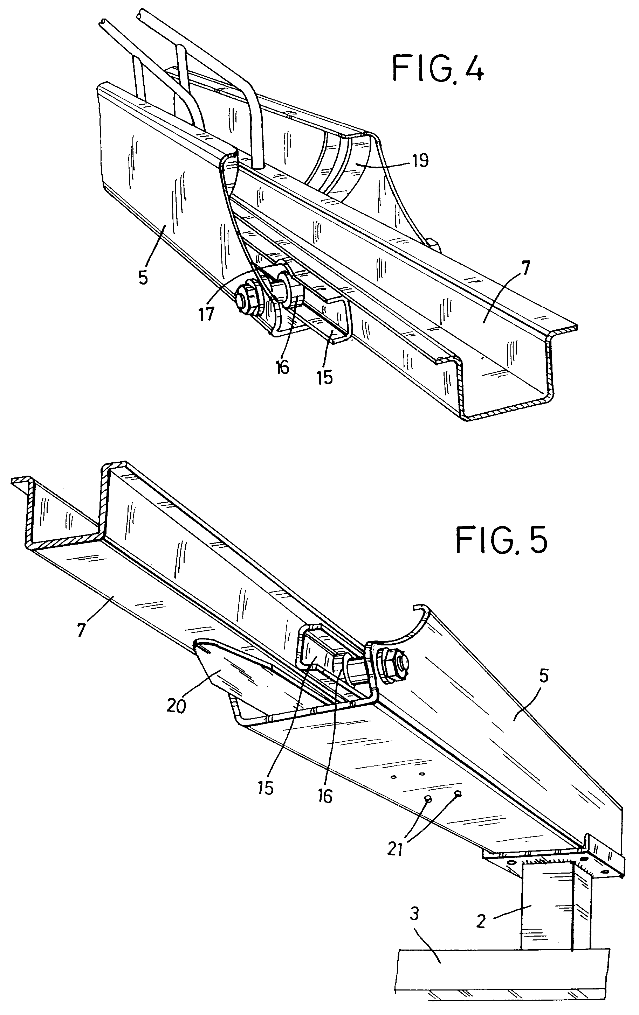

- Fig. 4: den Knickbereich wie in Fig. 3, jedoch bei teilweise eingeschobener Aufnahme in einer Ansicht von oben,
- Fig. 5: die Situation von Fig. 4 in einer Ansicht von unten,

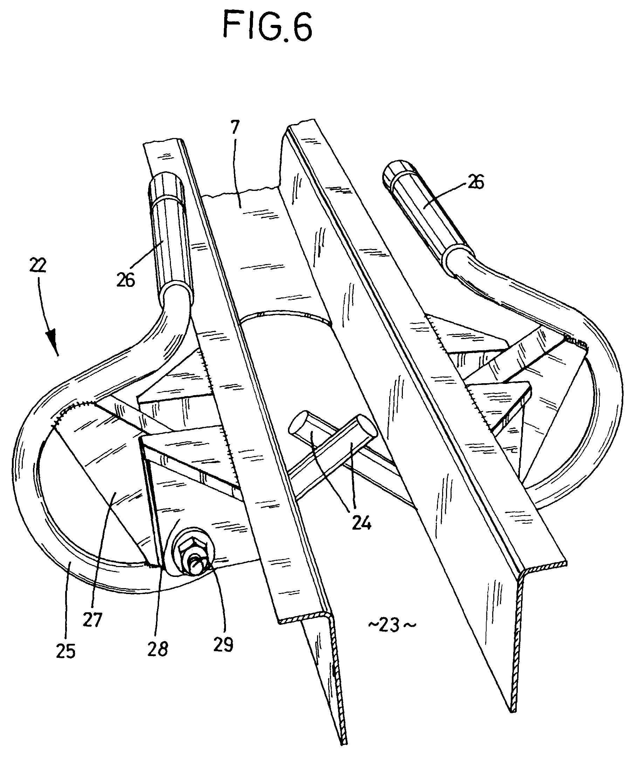

- Fig. 6: die an einer oberen Aufnahme vorgesehenen Verriegelung, und
- Fig. 7: den Knickbereich wie in den Fig. 3 und 4, jedoch in einer seitlichen Darstellung bei einem 2. Ausführungsbeispiel.

In den Zeichnungen ist mit 1 ein Rahmen bezeichnet, der aus vertikalen Stützen 2 und einem Horizontalträger 3 gebildet ist, wobei an den Stützen 2 zusätzliche, schräg verlaufende Stützstreben 4 vorgesehen sind, die sich bis zum Boden erstrecken. Die Stützen 2 und die Stützstreben 4 können mit dem Boden verschraubt oder in den Boden eingelassen sein, um dem Rahmen 1 eine hohe Standfestigkeit zu verleihen und vordere vertikale Stützen überflüssig zu machen, die den Zugang zu den Fahrrädern erschweren könnten. Der Rahmen 1 umfaßt weiterhin horizontale Ausleger 5, die sich von dem Horizontalträger 3 aus zur Vorderseite der Einstellanlage erstrecken, wobei als Vorderseite die dem Benutzer zugewandte Seite bezeichnet ist.

Die Einstellanlage weist untere Aufnahmen 6 für Fahrräder auf und ähnlich ausgestaltete obere Aufnahmen 7. Die Aufnahmen 6 und 7 sind jeweils etwa als U-förmige Schienen ausgebildet, die zur Führung der Laufräder eines Fahrrades dienen. Sowohl die unteren Aufnahmen 6 als auch die oberen Ausleger 5 mit den oberen Aufnahmen 7 sind jeweils abwechselnd nebeneinander höhenversetzt angeordnet, um eine möglichst nahe benachbarte Anordnung von Fahrrädern zu ermöglichen und dabei Kollisionen zwischen deren Lenkstangen zu vermeiden.

Die zur Rückseite der Einstellanlage gerichteten Enden der Aufnahmen 6 und 7 weisen jeweils Bügel 8 auf, die das Vorderrad eines Fahrrades umgeben und so das Fahrrad gegen seitliches Kippen sichern und auch dagegen, daß das Fahrrad über das rückseitige Ende der jeweiligen Aufnahme hinaus zu weit in die Aufnahme 6 bzw. 7 eingeschoben werden kann. Die Bügel 8 können vorteilhaft so weit seitlich oder nach oben um das Vorderrad herumgezogen sein, daß sie das Umschließen des Fahrradrahmens und des Bügels 8 mit einem handelsüblichen Ringschloß ermöglichen, um eine gute Diebstahlsicherung für das Fahrrad zu gewährleisten.

Die unteren Aufnahmen 6 sind um eine horizontale Achse 9 vertikal schwenkbeweglich gelagert. Zu diesem Zweck sind die unteren Aufnahmen 6 von unten in einer etwa U-förmigen Klaue 10 gehalten. Distanzstützen 11 ermöglichen nicht nur die unterschiedlichen Höhenanordnungen der unteren Aufnahmen 6, sondern können auch deren horizontale Verschwenkbarkeit ermöglichen. Anstelle einer vergleichsweise komplizierten und kostenintensiven horizontal schwenkbeweglichen Lagerung um die Distanzstütze 11 kann auf einfache Weise diese horizontale Schwenkbeweglichkeit der Aufnahmen 6 dadurch ermöglicht werden, daß deren Lagerung im Bereich der Klaue 11 und der Achse 9 mit entsprechend großem Spiel ausgestaltet ist.

Eine Sicherung gegen ein unbeabsichtigtes Zurückrollen des Fahrrades innerhalb einer unteren Aufnahme 6 wird durch eine Haltekante 12 bewirkt, die das Laufrad des in die Aufnahme 6 eingeschobenen Fahrrades hintergreift. Im dargestellten Ausführungsbeispiel ist die Haltekante 12 als frei drehbare Rolle ausgestaltet, um ein besonders leichtes Überfahren beim Einstellen des Fahrrades zu ermöglichen. Unterstützend ist eine ähnliche, jedoch niedriger als die Haltekante 12 angeordnete Hilfsrolle 14 vorgesehen, so daß das Laufrad des Fahrrades über die Hilfsrolle 14 allmählich beim Einschieben in die Aufnahme 6 auf die Höhe der Haltekalte 12 angehoben wird.

Weitere, ggf. noch niedriger als die Hilfsrolle 14 angeordnete Rollen können vorgesehen sein, um die Laufräder in der Aufnahme 6 oberhalb des Profilgrundes der etwa U-förmig profilierten Schiene zu führen, so daß Verschmutzungen, kleinere Steine und ähnliche Hindernisse weder den Widerstand beim Einschieben des Fahrrades erhöhen können noch zu Ablenkungen und Verkantungen des Vorderrades führen können.

Die oberen Aufnahmen 7 sind innerhalb der Ausleger 5 teleskopierbar angeordnet. Zugunsten einer einfachen Handhabung ist die Bewegung der Aufnahmen 7 beim Ein- oder Ausfahren fest vorgegeben: Eine Aufnahme 7 weist außen beidseitig nach außen offene C-förmige Führungsschienen 15 auf, wobei ortsfest in den Auslegern 5 Führungssteine 16 vorgesehen sind, die in die Führungsschienen 15 eingreifen und die aus gleitfreudigem Kunststoffmaterial od. dgl. bestehen können, beim dargestellten Ausführungsbeispiel jedoch als drehbeweglich gelagerte Rollen ausgestaltet sind.

Die Führungsschienen 15 weisen nach oben ausgebauchte Rasten 17 auf, mit denen sie die Führungssteine 16 teilweise umgreifen, wenn die oberen Aufnahmen 7 in die Ausleger 5 eingeschoben sind. Je höher das Gewicht der mit einem Fahrrad belasteten Aufnahme 7 ist, desto sicherer ist die Verrastung, so daß insgesamt eine sichere Ablage des Fahrrades gewährleistet ist und ein unbeabsichtigtes Lösen des Fahrrades oder eine unbeabsichtigte Bewegung der gesamten Aufnahme 7 ausgeschlossen werden kann. Eine Dämpfung beim Einschieben der Aufnahmen 7 in die Ausleger 5 kann in Form von Elastomerpuffern vorgesehen sein, die am rückseitigen Ende der Ausleger 5 vorgesehen sind und die auch einen Endanschlag für die Aufnahmen 7 und deren Einschubbewegung bilden.

Die Rasten 17 können abweichend von dem dargestellten Ausführungsbeispiel so weit um die Führungssteine 16 herumgreifen, daß sie Endanschläge für die Aufnahmen 7 beim Einschieben in die Ausleger 5 bilden. Alternativ dazu können an die Aufnahmen 7 in einfacher Anpassung an die örtlichen Gegebenheiten jeweils ortsgerecht Endanschläge angeschraubt werden, z. B. in Form von Elastomerpuffern.

Es kann vorgesehen sein, die Aufnahmen 7 weiter in die Ausleger 5 einzuschieben, als es der Tiefe der Ausleger 5 entspricht, so daß die rückseitigen Enden der Aufnahmen 7 aus den Auslegern 5 herausschauen. Auf diese Weise kann die Biegebelastung der Ausleger 5 und des gesamten Rahmens 1 verringert werden.

Am rückseitigen Ende der Aufnahme 7 weist diese an ihren beiden Seiten nach außen ragende Führungssteine 18 auf, die bei dem dargestellten Ausführungsbeispiel ähnlich den Führungssteinen 16 ebenfalls als frei drehbare Rollen ausgestaltet sind und die in Führungsschienen 19 laufen, welche C-förmig ausgestaltet sind und an den beiden Seitenwandungen des Auslegers 5 vorgesehen sind. Die Führungsschienen 19 verlaufen von einer niedrigen Höhe am rückseitigen Ende der Ausleger 5 zu einem höheren Ende im vorderseitigen Bereich der Ausleger 5. Im Bereich dieses vorderen Endes ist ein Anschlag für die in den Führungsschienen 19 laufenden Führungssteine 18 vorgesehen, wobei im dargestellten Ausführungsbeispiel dieser Anschlag preisgünstig und stabil durch die abgewinkelte Oberkante des Auslegers 5 gebildet ist.

Durch die geometrischen Verhältnisse zwischen den Führungssteinen 16 und dem durch den Anschlag begrenzten Ende der Führungsschienen 19 ergibt sich bei vollständig aus dem Ausleger 5 herausgezogener Aufnahme 7 eine Schrägstellung dieser Aufnahme 7 nach unten, die bei dem dargestellten Ausführungsbeispiel einen verbleibenden Freiraum von rein beispielhaft etwa 40 cm zwischen dem Boden und dem vorderseitigen, unteren Ende der Aufnahme 7 bewirkt. Auf diese Weise wird ein ausreichend großer Freiraum unterhalb der Aufnahme 7 sichergestellt, der ein Einstellen auch großer Fahrräder in der unteren Ebene der Einstellanlage ermöglicht, wobei auf den Gepackträgern der unten abgestellten Fahrräder sogar noch ausreichend Platz für einen Gepäckkorb vorgesehen ist, ohne daß es zu Kollisionen mit den abgesenkten oberen Aufnahmen 7 kommt.

Die Zugänglichkeit zu den unteren Fahrrädern kann dadurch verbessert werden, daß entweder die oberen Ausleger 5 mit ihrem rückseitigen Ende entsprechend weit über den Horizontalträger 3 hinaus geführt sind und ein entsprechend tiefes Einschieben der Aufnahmen 7 ermöglichen, oder es kann in der beschriebenen Weise vorgesehen sein, die Aufnahme 7 so weit in den Ausleger 5 einzuschieben, daß das Ende der Aufnahme 7 über das rückseitige Ende des Auslegers 5 übersteht.

Beim Ausziehen der Aufnahme 7 aus einem Ausleger 5 und beim anschließenden Absenken der Aufnahme 7 ist auf konstruktiv einfache und preisgünstige Weise eine Anschlagdämpfung vorgesehen, die die Aufnahme 7 vor Erreichen ihrer unteren Endstellung abbremst: Diese Anschlagdämpfung ist durch eine Federzunge 20 gebildet, die zwischen der Aufnahme 7 und der unteren Wandung des Auslegers 5 vorgesehen und beispielsweise mit zwei Schrauben 21 befestigt ist.

Eine sichere Festlegung der Fahrräder in den oberen Aufnahmen 7 wird durch an den Aufnahmen 7 vorgesehene Verriegelungen 22 gewährleistet: Die Aufnahme 7 weist in dem Bereich, in dem bei vollständig eingeschobenem Fahrrad das Hinterrad dieses Fahrrades vorgesehen ist, eine Ausnehmung 23 auf. Durch diese Ausnehmung 23 ragen zwei Anschläge 24 nach oben in den Bewegungsraum, in dem sich die Laufräder des Fahrrades bewegen werden, wenn das Fahrrad in die Aufnahme 7 eingeschoben wird.

Die Anschläge 24 sind bei dem dargestellten Ausführungsbeispiel jeweils einteilig zu einem Bügel 25 ausgeformt, der an seinem dem Anschlag 24 gegenüberliegenden Ende einen Riegel 26 bildet. Die Formbeständigkeit des Bügels 25 wird durch eine Querlasche 27 unterstützt. Jeweils zwei seitliche Haltelaschen 28 sind beidseitig neben der Aufnahme 7 vorgesehen, wobei sich durch die Haltelaschen 28 und die Querlasche 27 jeweils eine Schwenkachse 29 erstreckt. Eine Feder ist vorgesehen, die den Bügel 25 in einer Stellung hält, in der die Anschläge 24 wie beschrieben nach oben ragen. Diese Feder kann zwischen den Haltelaschen 28 angeordnet sein, um die Schwenkachse 29 verlaufen, sich einerseits gegen die Aufnahme 7 und andererseits gegen die Querlasche 27 abstützen.

Der Verfahrensablauf beim Einstellen eines Fahrrades in einen oberen Stellplatz ist wie folgt:

Aus ihrer in einen Ausleger 5 eingeschobenen Stellung wird eine obere Aufnahme 7 herausgezogen und abgesenkt bis in die vollständig abgesenkte Stellung, in der das untere Ende der Aufnahme 7 in geringem Abstand über dem Boden befindlich ist.

Dabei dient ein als geschlossener Bügel ausgestalteter Handgriff 30 zur leichteren Handhabung. Nun wird das Vorderrad des Fahrrades angehoben, wobei das Fahrrad auf einfache Weise an seinem Lenker gehandhabt werden kann.

Das Vorderrad wird in die Aufnahme 7 eingeschoben, bis es in die Ausnehmung 23 eintaucht. Bei weiterer Vorwärtsbewegung des Fahrrades drückt das Vorderrad die beiden Anschläge 24 der Verriegelung 22 nach unten. Dadurch verschwenken die Bügel 25 um die Schwenkachsen 29; die Riegel 26 bewegen sich zueinander und hintergreifen die Felge des Vorderrades. Abweichend von dem dargestellten Ausführungsbeispiel kann vorgesehen sein, die Riegel 26 nicht geradinig, sondern gebogen verlaufen zu lassen, so daß sie sich möglichst großflächig an die Felgen des Laufrades anlegen und Beschädigungen durch hohe Flächenpressungen vermieden werden. In jedem Fall kann an den Riegeln 26 eine nachgiebige Ummantelung, ein Feder- oder Elastomerpuffer o. dgl. vorgesehen sein, um die Felge vor Beschädigungen zu schützen.

Die Riegel 26 liegen der Felge nicht im tiefsten Punkt des Felgenkreises an, sondern weiter vorn in Fahrtrichtung des Fahrrades. So sichern sie das Rad gegen Zurückrollen, lassen jedoch eine eingeschränkte Vorwärtsbewegung des Fahrrades in dessen Fahrtrichtung zu. Aufgrund der schrägen Anordnung der Aufnahme 7 ist eine unbeabsichtigte, selbständige derartige Vorwärtsbewegung des Fahrrades jedoch ausgeschlossen.

Das Fahrrad befindet sich nun in einer gesicherten Zwischenstellung, in der es in der Ausnehmung 23 aufgenommen und durch die Verriegelung 22 fixiert ist. Der Benutzer kann nun den Lenker des Fahrrades loslassen, sich hinter das Fahrrad stellen und dessen Gepäckträger ergreifen.

Das Fahrrad kann nun weiter in die Aufnahme 7 eingeschoben werden. Die auch bei in ihrer Riegelstellung befindlichen Riegeln 26 eingeschränkt mögliche Vorwärtsbewegung des Fahrrades bewirkt, daß die Anschläge 24 freigegeben werden, die Bügel 25 federbelastet in ihre Offenstellung zurückschwenken und die Riegel 26 die Felge des vorderen Laufrades endgültig freigeben. Das Fahrrad kann nun vollständig in die Aufnahme 7 eingeschoben werden, bis das Vorderrad durch den Bügel 8 und das Hinterrad genauso wie vorher das Vorderrad durch die Verriegelung 22 gesichert ist.

In dieser Stellung ist das Fahrrad gegenüber Längs- und Kippbewegungen gesichert, so daß es nun vollständig losgelassen werden kann. Mittels des Handgriffes 30 wird nun die Aufnahme 7 angehoben und in den Ausleger 5 eingeschoben, bis die deutlich fühlbare Verrastung zwischen den Rasten 17 und den Führungsschienen 15 erfolgt und / oder die Einschubbewegung durch einen Endanschlag begrenzt wird.

Die Entnahme des Fahrrades aus der oberen Aufnahme 7 erfolgt in grundsätzlich genau umgekehrter Reihenfolge. Bei der Entnahme des jeweils durch die Verriegelung 22 festgelegten Laufrades ist jeweils zu beachten, daß das Fahrrad zunächst kurz in Fahrtrichtung vorwärts geschoben werden muß, bis die beiden Anschläge 24 entlastet sind und die beiden Riegel 26 durch die Federbelastung der Bügel 25 in ihre Freigabestellung gespreizt werden.

Anschließend kann das betreffende Laufrad nach oben angehoben und das Fahrrad so weit zurückgezogen werden, bis sein Laufrad außer Eingriff mit den Anschlägen 24 wieder in die Aufnahme 7 abgesenkt werden kann. Da ohne dieses bewußte Anheben des Laufrades eine automatische Fixierung des Laufrades durch die Verriegelung 22 bei der Rückwärtsbewegung des Fahrrades erfolgt, sowohl zunächst beim Hinterrad als auch später beim Vorderrad des Fahrrades, ist eine gefahrlose und sichere Entnahme des Fahrrades möglich, ohne daß das Fahrrad aufgrund der schräg verlaufenden Aufnahme 7 plötzlich unkontrolliert oder überraschend beschleunigt.

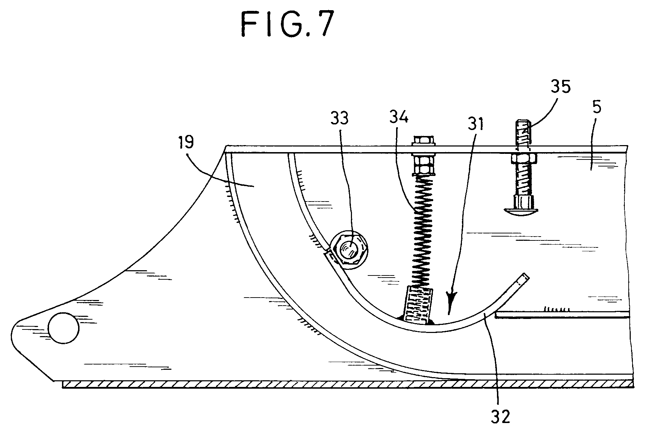

In Fig. 7 ist der Knickbereich einer oberen Aufnahme 7 dargestellt, wobei ein Schnitt in Längsrichtung durch den Ausleger 5 dargestellt ist. Die Führungsschiene 19 stellt den Bewegungsraum für die Führungssteine 18 der Aufnahme 7 dar. Kurt bevor ein Führungsstein 18 seinen Endpunkt beim Ausziehen einer oberen Aufnahme 7 erreicht, gelangt er an eine Querschnittsverengung der Führungsschiene 19, so daß die Absenkbewegung der oberen Aufnahme 7 gebremst wird.

Zu diesem Zweck weist die Führungsschiene 19 einen nachgiebigen Anschlag 31 auf, der durch einen gebogenen Blechstreifen 32 gebildet ist. Dieser Blechstreifen 32 ragt in den Querschnitt der Führungsschiene 19 hinein und ist an seinem einen Ende um einen Drehpunkt 33 schwenkbar gelagert. Mit seinem gegenüberliegenden, freien Ende liegt der Blechstreifen 32 an der Führungsschiene 19 an aufgrund der Vorspannung durch eine Druckfeder 34.

Ein Führungsstein 18 drückt, wenn der obere Ausleger 7 aus dem Ausleger 5 herausgezogen wird, den Blechstreifen 32 gegen die Wirkung der Druckfeder 34 nach oben, um den inneren Querschnitt der Führungsschiene 19 im Bereich des Anschlags 31 zu vergrößern. Auf diese Weise wird die Auszugsbewegung der oberen Aufnahme 7 gebremst, so daß insbesondere beim beladenen Zustand, wenn ein Fahrrad innerhalb der Aufnahme 7 abgestellt ist, ein hartes Anschlagen der Aufnahme 7 vermieden wird und sowohl die Einstellanlage als auch das betreffende Fahrrad geschont wird. Die Bewegung des Blechstreifens 32 wird durch eine Stellschraube 35 begrenzt.

## Patentansprüche

1. Einstellanlage für Fahrräder,
mit einem Rahmen,
und mit unteren und oberen, an dem Rahmen festgelegten Aufnahmen für die Fahrräder,
wobei die oberen Aufnahmen gegenüber dem Rahmen absenkbar ausgebildet sind,
und mit einer benutzerfernen Rückseite sowie einer dem Benutzer zugewandten Vorderseite,
dadurch gekennzeichnet, daß die oberen Aufnahmen (7) eine Verriegelung (22) zur Festlegung des Fahrrades aufweisen.

2. Einstellanlage nach Anspruch 1, dadurch gekennzeichnet, daß die Verriegelung (22) auf wenigstens ein Laufrad des Fahrrades einwirkt.

3. Einstellanlage nach Anspruch 2, dadurch gekennzeichnet, daß die Verriegelung (22) auf das der Vorderseite nahe Laufrad des Fahrrades einwirkt.

4. Einstellanlage nach einem der vorhergehenden Ansprüche, dadurch gekennzeichnet, daß die Verriegelung (22) einen beweglich gelagerten Anschlag (24) aufweist, der in den Bewegungsraum des in die Aufnahme (7) eingeschobenen Fahrrades ragt, sowie einen beweglich gelagerten Riegel (26), der mit dem Anschlag (24) verbunden ist und synchron mit der Bewegung des Anschlages (24) zwischen einer das Fahrrad freigebenden Freigabestellung und einer das Fahrrad festlegenden Riegelstellung beweglich ist.

5. Einstellanlage nach Anspruch 4, dadurch gekennzeichnet, daß der Anschlag (24) zur Anlage am Laufrad des Fahrrades positioniert ist.

6. Einstellanlage nach Anspruch 5, dadurch gekennzeichnet, daß der Anschlag (24) unterhalb des Laufrades vorgesehen ist und bei Belastung durch das Laufrad den (26) in seine Riegelstellung führend gelagert ist.

7. Einstellanlage nach einem der Ansprüche 4 bis 6, dadurch gekennzeichnet, daß in der Aufnahme (7) eine Ausnehmung (23) unterhalb der Laufbahn des Laufrades vorgesehen ist, wobei sich der Anschlag (24) durch die Ausnehmung (23) erstreckt.

8. Einstellanlage nach Anspruch 4, dadurch gekennzeichnet, daß der Anschlag (24) und der Riegel (26) als einstückiger, schwenkbar gelagerter Bügel (25) ausgebildet sind.

9. Einstellanlage nach Anspruch 4, dadurch gekennzeichnet, daß der Riegel (26) die Felge des Laufrades in seiner Riegelstellung hintergreift.

10. Einstellanlage für Fahrräder,
mit einem Rahmen,
und mit unteren und oberen, an dem Rahmen festgelegten Aufnahmen für die Fahrräder,
wobei die oberen Aufnahmen gegenüber dem Rahmen absenkbar ausgebildet sind,
und mit einer benutzerfernen Rückseite sowie einer dem Benutzer zugewandten Vorderseite,
dadurch gekennzeichnet, daß die unteren Aufnahmen (6) vertikal schwenkbeweglich gelagert sind.

11. Einstellanlage für Fahrräder,
mit einem Rahmen,
und mit unteren und oberen, an dem Rahmen festgelegten Aufnahmen für die Fahrräder,
wobei die oberen Aufnahmen gegenüber dem Rahmen absenkbar ausgebildet sind,
und mit einer benutzerfernen Rückseite sowie einer dem Benutzer zugewandten Vorderseite,
dadurch gekennzeichnet, daß die unteren Aufnahmen (6) horizontal schwenkbeweglich gelagert sind.

12. Einstellanlage für Fahrräder
mit einem Rahmen,
und mit unteren und oberen, an dem Rahmen festgelegten Aufnahmen für die Fahrräder,
wobei die oberen Aufnahmen gegenüber dem Rahmen absenkbar ausgebildet sind,
und mit einer benutzerfernen Rückseite sowie einer dem Benutzer zugewandten Vorderseite,
dadurch gekennzeichnet, daß die oberen Aufnahmen (7) teleskopierbar ausgestaltet sind und in ihrem ausgezogenen Zustand mit ihrem vorderseitigen Ende absenkbar gelagert sind.

13. Einstellanlage nach Anspruch 12, dadurch gekennzeichnet, daß zwischen dem Rahmen (1) und den oberen Aufnahmen (7) C-förmige Führungsschienen (15, 19) einerseits und darin bewegliche Führungssteine (16, 18) andererseits vorgesehen sind.

14. Einstellanlage nach Anspruch 13, dadurch gekennzeichnet, daß die Führungssteine (16, 18) als drehbare Rollen ausgestaltet sind.

15. Einstellanlage nach Anspruch 12, dadurch gekennzeichnet, daß der oberen Aufnahme (7) eine Raste (17) zugeordnet ist, die die Aufnahme (7) in ihrer eingeschobenen und angehobenen Stellung fixiert.

16. Einstellanlage nach Anspruch 12, dadurch gekennzeichnet, daß ein Endanschlag für die Aufnahme (7) vorgesehen ist, der diese mit ihrem abgesenkten vorderseitigen Ende im Abstand über dem Boden hält.

17. Einstellanlage nach Anspruch 16, dadurch gekennzeichnet, daß der Endanschlag auf das rückseitige Ende der Aufnahme (7) einwirkt.

18. Einstellanlage nach Anspruch 1, dadurch gekennzeichnet, daß am rückseitigen Ende der Aufnahmen (6, 7) jeweils ein das Laufrad eines eingeschobenen Fahrrades sichernder Bügel (8) angeordnet ist.

19. Einstellanlage nach Anspruch 4, dadurch gekennzeichnet, daß die Riegel eine dem Innendurchmesser der Felge annähernd angepaßte Außenkontur aufweisen.

20. Einstellanlage nach Anspruch 12, dadurch gekennzeichnet, daß die oberen Aufnahmen (7) in am Rahmen festgelegten Auslegern (5) geführt sind und in ihrem in die Ausleger eingeschobenen Zustand über die Rückseite des Auslegers vorstehen.

21. Einstellanlage nach Anspruch 20, dadurch gekennzeichnet, daß an den oberen Aufnahmen (7) Anschlagelemente vorgesehen sind, die an die vorderseitige Kante des Auslegers bei in den Ausleger eingeschobener oberen Aufnahme (7) anstoßen.

22. Einstellanlage nach Anspruch 1, dadurch gekennzeichnet, daß die unteren Aufnahmen als Schienen mit im wesentlichen U-förmigem Querschnitt ausgestaltet sind, wobei quer zur Längsrichtung der Aufnahmen (6) horizontale, frei drehbare Rollen innerhalb des U-förmigen Profiles angeordnet sind.

23. Einstellanlage nach Anspruch 12, gekennzeichnet durch einen nachgiebigen Anschlag (31) im Bewegungsraum der oberen Aufnahme (7), der die Ausziehbewegung der oberen Aufnahme (7) kurz vor Erreichen von deren ausgezogener Endstellung dämpft.
